# EUROPÄISCHE PATENTANMELDUNG

(11) **EP 1 498 035 A1**
(43) Veröffentlichungstag der Anmeldung: **19.01.2005**
(21) Anmeldenummer: 03016155.8
(22) Anmeldetag: 16.07.2003
(51) Int. Cl.: A22C 13/00, B65D 75/66

(54) **Hüllnetz für Wurst und Verfahren zu seiner Herstellung**

(71) Anmelder: Huckfeldt & Thorlichen GmbH & Co., 25436 Tornesch (DE)
(72) Erfinder: Huckfeldt, Gebhard Rudolf, 22605 Hamburg (DE); Hanisch, Christian Ludwig, 25492 Heist (DE)
(74) Vertreter: Glawe, Delfs, Moll & Partner

(57) **Zusammenfassung**

Schlauchförmiges Hüllnetz (1) für Wurst und ähnliche Gegenstände. Das Hüllnetz (1) enthält einen längs verlaufenden Aufreißfaden, dessen Länge größer ist als die des Hüllnetzes (1) in dessen Gebrauchszustand. Dadurch ergeben sich von außen zugängliche Schlaufen (7) des Aufreißfadens, die zum Aufreißen gegriffen werden können. Das Netz ist zweckmäßigerweise ein Raschel- oder Kettengewirk. Der Aufreißfaden (3) ist in Maschen dieses Gewirks aufgenommen. Die Erfindung betrifft ferner ein Verfahren zum Herstellen eines solchen Netzes, eine mit dem Netz verbundene Wursthülle sowie einen von diesem Netz umhüllten Gegenstand.

## Beschreibung

Es ist bekannt, Wurst mit einem Hüllnetz zu umgeben. Dies ist ursprünglich dazu bestimmt, die Wursthülle vom Fülldruck zu entlasten. Heutzutage nimmt es mehr und mehr Dekorcharakter an. Es wird deshalb nicht nur bei Wurstsorten angewendet, die in einem Reifeprozeß Wasser verlieren und von denen es daher später leicht abgenommen werden kann, sondern auch für Frischwurst. Schneidet man bei dieser das Hüllnetz längs auf, um es entfernen zu können, schneidet man unvermeidlich auch in die Wurstoberfläche ein, was unerwünscht ist. Zwar ist es bekannt, genähte Wursthüllen mit einem Aufreißfaden innerhalb der Naht zu versehen (DE-U-78 07 929, DE-A-37 25 263). Jedoch werden Hüllnetze nahtlos als Schlauch geknüpft oder gewirkt, so daß dort eine Längsnaht, in die man einen Aufreißfaden einlegen könnte, nicht zur Verfügung steht. Auch werden sie endlos hergestellt, so daß der Aufreißfaden in seiner ganzen Länge in das Hüllnetz eingebunden ist und kein herausstehendes Ende vorhanden ist, an dem man ihn fassen könnte.

Der Erfindung liegt die Aufgabe zugrunde, das Öffnen des Hüllnetzes zu erleichtern. Die erfindungsgemäße Lösung liegt darin, daß es mit einem Aufreißfaden versehen ist, dessen Länge größer ist als die des Hüllnetzes im Gebrauchszustand. Dadurch bildet der Aufreißfaden mindestens eine Schlaufe, die von der Außenseite her gegriffen werden kann, um den Aufreißvorgang einzuleiten.

Zweckmäßigerweise hat das Netz eine in Längsrichtung dehnbare Struktur und hat es im Herstellungszustand eine größere Länge als im Gebrauchszustand. Der Aufreißfaden wird dann mit einer Länge eingebunden, die der Länge des Netzes bei der Herstellung entspricht. Wenn das Netz danach auf die Länge des Gebrauchs reduziert wird, bildet der Aufreißfaden überall dort Schlaufen, wo er nicht vom Netz festgehalten wird, also in den offenen Netzwaben. Dort kann er gegriffen werden. Das Ergebnis läßt sich demnach so beschreiben, daß der Aufreißfaden im Gebrauchszustand des Hüllnetzes, also insbesondere an der gefüllten Wurst, mindestens eine, vorzugsweise eine Vielzahl von Schlaufen bildet, die von außen zugänglich sind und an denen zum Aufreißen angegriffen werden kann.

Zwar ist es denkbar, den Aufreißfaden einfach innenseitig an das Hüllnetz anzuheften. Weil die Hüllnetzstränge aber in der Regel ziemlich dick sind, ist es sehr schwer, mit einem so gelegenen Aufreißfaden auf die Stränge des Hüllnetzes eine hinreichende Aufreißwirkung auszuüben. Nach einem wichtigen Merkmal der Erfindung ist daher vorgesehen, daß die Wabenstränge des Netzes aus Wirkmaschen zusammengesetzt sind und der Aufreißfaden darin wirktechnisch eingebunden ist. Das bedeutet, daß der Aufreißfaden nicht die gesamte Dicke des Netzstranges zu durchtrennen hat sondern nur einen Teil des Netzstrangs, nämlich nur denjenigen Faden oder diejenigen Fäden, die im Netzstrang außerhalb des Aufreißfadens gelegen sind. Dies ist vorzugsweise nur ein einziger Faden, also nur ein geringer Teil des gesamten Strangquerschnitts. Sobald er unter der Einwirkung des Aufreißfadens durchgerissen ist, löst sich die ihm zugehörige Masche, wodurch der Strang durchtrennt wird.

Dieser Effekt wird leicht erreicht, wenn die Wabenstränge des Hüllnetzes, durch die der Aufreißfaden geführt ist, wirktechnisch als Franse eines Raschel- oder Kettengewirks ausgebildet sind. Dabei kann der Aufreißfaden zwischen einem Paar von Maschenschenkeln und einem Platinenfaden liegen, der sich von einem Maschenfuß einer Masche zum Maschenfuß der nächsten Masche streckt. So läßt sich der Aufreißfaden besonders leicht einbinden. Außerdem läßt sich auf diese Weise besonders leicht erreichen, daß lediglich ein Faden außerhalb des Aufreißfadens liegt, nämlich der Platinenfaden. Falls dieser bei der Herstellung zunächst innerhalb des geraschelten oder kettengewirkten Netzschlauchs liegt, wendet man den Netzschlauch nach der Herstellung.

Damit das Aufreißen nicht dadurch erschwert wird, daß mehrere aufeinanderfolgende, den Aufreißfaden enthaltende Netzstränge am Aufreißfaden entlang rutschen und sich zusammenlagern, kann es zweckmäßig sein, sie festzulegen. Dies kann beispielsweise dadurch geschehen, daß sie mit der Wursthülle und/oder dem Aufreißfaden verklebt werden.

Der leichteren Verarbeitbarkeit halber wird das Hüllnetz zweckmäßigerweise mit der zugehörigen Wursthülle fest verbunden, beispielsweise verklebt. Wenn es sich bei der Wursthülle um ein mit Collagen imprägniertes Gewebe oder Gewirk handelt, kann die Verklebung gleichzeitig mit der Aufbringung des Collagens und durch das Collagen erfolgen. Wenn das Hüllnetz erst nach der Verfestigung des Collagens aufgebracht wird oder wenn andere Wursthüllen verwendet werden, beispielsweise aus Zellulose oder Kunststoff, erfolgt die Verklebung auf andere Weise unter Zusatz eines geeigneten Klebstoffs.

Beim Füllen der Wursthülle kann die Verbindung zwischen dem Hüllnetz und der Wursthülle starken Reibkräften ausgesetzt sein, die vornehmlich in Längsrichtung wirken. Dadurch ist insbesondere die Verbindung zwischen den quer verlaufenden Strängen des Hüllnetzes mit der Wursthülle betroffen. Es kann daher zweckmäßig sein, dafür zu sorgen, daß außer solchen quer verlaufenden Netzsträngen auch solche vorhanden sind, die in Längsrichtung verlaufen, und daß hauptsächlich diese für die Verklebung des Hüllnetzes mit der Wursthülle herangezogen werden. Die Verklebung kann sich sogar auf diese in Längsrichtung verlaufenden Netzstränge beschränken oder bei diesen zumindest sicherer oder häufiger oder großflächiger ausgebildet sein als im Bereich der quer verlaufenden Netzstränge.
Bei dem fertigen Produkt, an welchem das Hüllnetz - im allgemeinen gemeinsam mit der Wursthülle - an den Enden verschlossen ist, soll nach der Erfindung der Aufreißfaden gleichfalls in den Endverschlüssen gesichert sein, damit er beim Aufreißen unter der auf ihn wirkenden Kraft sich nicht herausziehen läßt.

Die Erfindung bezieht sich vornehmlich auf Wurst und ähnliche Lebensmittel, die in einem Hüllschlauch mit Endverschlüssen verpackt werden. Sie ist jedoch nicht darauf beschränkt.

Die Erfindung wird im folgenden näher unter Bezugnahme auf die Zeichnung erläutert, die ein vorteilhaftes Ausführungsbeispiel veranschaulicht. Es zeigen:
- Fig. 1: die Gesamtansicht einer mit Hüllnetz und Aufreißfaden versehenen Wurst,
- Fig. 2: eine vergrößerte Teilansicht des Hüllnetzes mit Aufreißfaden,
- Fig. 3 und 4: verschiedene Maschenbilder eines Netzstrangs mit Aufreißfaden und
- Fig. 5: den Vorgang des Aufreißens.

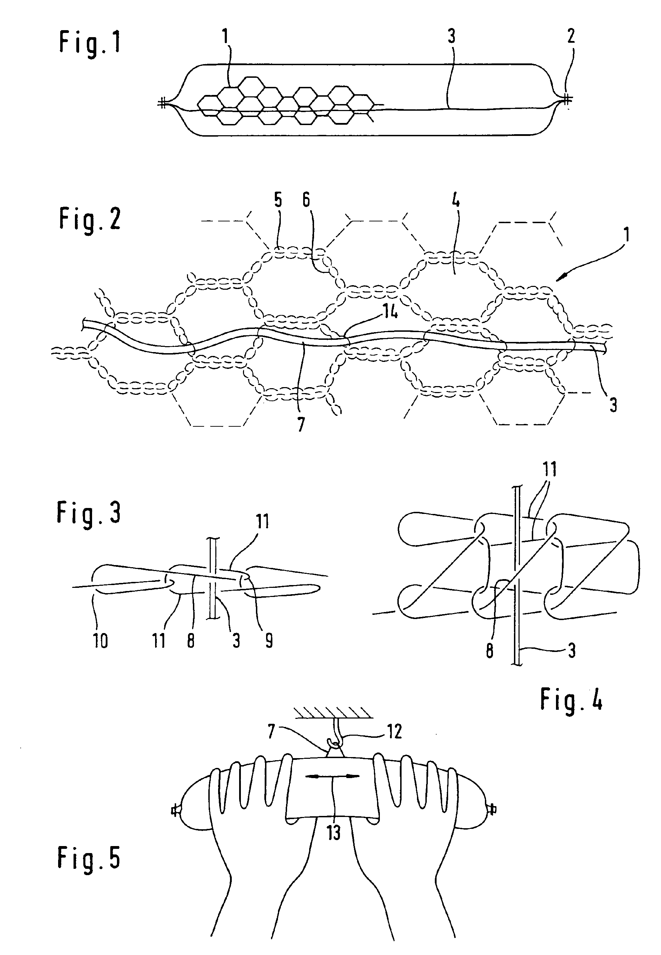

Die Wurst gemäß Fig. 1 ist in einer Wursthülle enthalten, die außen von einem Hüllnetz 1 dicht umgeben ist. An den Enden sind die Wursthülle und das Netz 1 gemeinsam beispielsweise durch Clips 2 verschlossen. In die Clips ist auch ein Aufreißfaden 3 zugfest eingebunden, der in dem Hüllnetz 1 längs durchlaufend vorgesehen ist.

Das Hüllnetz 1 besteht aus Waben 4, die von Längssträngen 5 und Quersträngen 6 gebildet sind. Es handelt sich vorzugsweise um ein als Schlauch hergestelltes Raschel- oder Kettengewirk, bei dem die quer verlaufenden Stränge 6 als Franse (Luftmaschen) und die längs verlaufenden Stränge 5 als Trikot gewirkt sind. Die längs verlaufenden Stränge 5 umfassen zweckmäßigerweise mehrere (beispielsweise 5) Maschen, damit sie eine gewisse Längsausdehnung haben und dadurch hinreichende Fläche für eine Klebverbindung mit der darunter liegenden Wursthülle zur Verfügung zu stellen.Die quer verlaufenden Stränge 6 können einmaschig (Fig. 3) oder auch mehrmaschig (Fig. 4 dreimaschig) ausgebildet sein. In jedem Fall liegt der Aufreißfaden 3 zweckmäßigerweise zwischen dem Platinenfaden 8, der vom Fuß 9 einer Masche durchläuft zum Kopf 10 der nächsten Masche, einerseits und den Schenkeln 11 einer Masche andererseits. Dabei soll der Platinenfaden 8 auf der Außenseite des Gewirks liegen, damit nur er vom Aufreißfaden 3 zerrissen zu werden braucht. Danach löst sich die zugehörige Masche insgesamt auf.

Wenn der Aufreißfaden 3 durch sämtliche in einer Reihe hintereinander liegenden Querstränge geführt ist, wird auf diese Weise das Hüllnetz in seiner Gesamtheit aufgerissen und kann leicht von der Wurst entfernt werden. Diese kann danach leicht in gewohnter Weise gepellt werden. Der Aufreißvorgang wird erleichtert, wenn der Aufreißfaden mit den ihn aufnehmenden Maschen verklebt oder in anderer Weise so verbunden ist, daß keine Masche am Aufreißfaden entlanggleiten und sich mit der nächsten Masche zusammenlegen kann. Dasselbe Ziel wird durch die schiebefeste Verbindung der Masche oder des sie enthaltenden Strangs mit der Wursthülle erreicht.

Obgleich der Aufreißfaden 3 zweckmäßigerweise durch Maschen der quer verlaufenden Stränge geführt ist, kann sie stattdessen auch durch einen längs verlaufenden Wabenstrang 5 geführt sein. Das gilt insbesondere dann, wenn dieser nur eine oder wenige Maschen enthält.

Hergestellt wird das Hüllnetz in längs gestrecktem Zustand. Die den Aufreißfaden aufnehmenden und im Gebrauchszustand (Fig. 2) mit einer beträchtlichen Querkomponente verlaufenden Querstränge 6 sind dann mehr oder weniger in Längsrichtung orientiert. Die den Aufreißfaden 3 aufnehmenden Maschen aufeinanderfolgender Querstränge sind dann weiter voneinander entfernt als im Gebrauchszustand. Wird das Netz danach in den Gebrauchszustand überführt, verkürzt sich das Netz, während der Aufreißfaden 3 seine Länge beibehält und zwischen den ihn aufnehmenden Quersträngen 6 Schlaufen bildet, die von außen zugänglich sind und zum Aufreißen gegriffen werden können.

Da die Fäden des Hüllnetzes schon aus optischen Gründen ziemlich dick sind, kann das Aufreißen des Netzes trotz der durch die Erfindung erreichten Erleichterung einen beträchtlichen Kraftaufwand erfordern. Dieser fällt leichter, wenn man gemäß Fig. 5 verfährt. Eine Schlaufe 7 des Aufreißfadens im Mittelbereich der Wurst wird in einen ortsfesten Haken 12 eingehängt und danach die mit beiden Händen gegriffene Wurst kräftig in Pfeilrichtung 13 einmal zur einen und dann zur anderen Seite bewegt.

## Patentansprüche

1. Schlauchförmiges Hüllnetz für Wurst und dergleichen, **dadurch gekennzeichnet, daß** es einen längs verlaufenden Aufreißfaden (3) aufweist, dessen Länge größer ist als die des im Gebrauchszustand befindlichen Hüllnetzes (1).

2. Netz nach Anspruch 1, **dadurch gekennzeichnet, daß** der Aufreißfaden (3) mindestens eine auf der Außenseite des Netzes greifbare Schlaufe (7) bildet.

3. Netz nach Anspruch 2 **dadurch gekennzeichnet, daß** es eine in Längsrichtung dehnbare Struktur aufweist und die Enden (14) der Schlaufe 7 mit Stellen (8) des Netzes (1) verbunden sind, die im längs gedehnten Zustand einen größeren Abstand voneinander als im Gebrauchszustand aufweisen.

4. Netz nach einem der Ansprüche 1 bis 3 **dadurch gekennzeichnet, daß** die Wabenstränge (5, 6) des Netzes (1) aus Wirkmaschen (8, 9, 10, 11) zusammengesetzt sind und der Aufreißfaden darin eingebunden ist.

5. Netz nach Anspruch 4 **dadurch gekennzeichnet, daß** die Wabenstränge (5, 6) des Netzes (1) teils als Fransen gewirkt sind und der Aufreißfaden (3) in die Fransen eingebunden ist.

6. Netz nach Anspruch 5 **dadurch gekennzeichnet, daß** der Aufreißfaden (3) zwischen einem Paar von Maschenschenkeln (11)und einem Platinenfaden (8) liegt.

7. Netz nach Anspruch 6 **dadurch gekennzeichnet, daß** der Platinenfaden (8) auf der Außenseite des Netzes (1) liegt.

8. Netz nach einem der Ansprüche 4 bis 7 **dadurch gekennzeichnet, daß** die den Aufreißfaden (3) enthaltenden Netzstränge (5 oder 6) mit der zugehörigen Wursthülle und/oder dem Aufreißfaden (3) verklebt sind.

9. Verfahren zum Herstellen eines Netzschlauchs durch Wirken oder Knüpfen, der im Herstellungszustand eine größere Länge als im Gebrauchszustand hat, **dadurch gekennzeichnet, daß** bei der Herstellung ein Aufreißfaden (3) eingearbeitet wird, den man während der Verkürzung des Netzes (1) im Übergang zum Gebrauchszustand zwischen mindestens zwei Stellen, an denen er mit dem Netz verbunden ist, eine von außen zugängliche Schlaufe bilden läßt.

10. Verfahren nach Anspruch 9 **dadurch gekennzeichnet, daß** das Netz als Raschel- oder Kettengewirk hergestellt und der Aufreißfaden in Wirkmaschen eingelegt wird.

11. Verfahren nach Anspruch 10 **dadurch gekennzeichnet, daß** er in je eine Masche aller Fransen (6) von aufeinander folgenden Netzwaben(4) eingelegt wird.

12. Verfahren nach einem der Ansprüche 9 bis 11 **dadurch gekennzeichnet, daß** der Aufreißfaden (3)zwischen die Maschenschenkel (11) und den zugehörigen Platinenfaden (8) eingelegt wird.

13. Verfahren nach Anspruch 12 **dadurch gekennzeichnet, daß** das Gewirk anschließend gewendet wird, falls der Platinenfaden (8) bei der Herstellung innen liegt.

14. Wursthülle, die mit einem Hüllnetz (1) nach einem der Ansprüche 1 bis 8 verbunden ist.

15. Wursthülle nach Anspruch 14 **dadurch gekennzeichnet, daß** das Hüllnetz (1) mit der Wursthülle verklebt ist.

16. Wursthülle nach Anspruch 15 **dadurch gekennzeichnet, daß** das gewirkte Hüllnetz in Längsrichtung verlaufende, als Trikot ausgebildete Wabenstränge 5 aufweist und die Verklebung mit der Wursthülle im Bereich dieser längs verlaufenden Wabenstränge (5) sicherer oder häufiger oder großflächiger ist als im Bereich der quer verlaufenden Wabenstränge (6).

17. Wurst oder dergleichen mit einer an den Enden verschlossenen Wursthülle, **dadurch gekennzeichnet, daß** sie von einem Hüllnetz (1) gemäß einem der Ansprüche 1 bis 8 oder einer Wursthülle nach einem der Ansprüche 14 bis 16 umhüllt ist und die Enden des Aufreißfadens (3) in den Endverschlüssen (2) der Wursthülle gesichert sind.

## Geänderte Patentansprüche

### Geänderte Patentansprüche gemäss Regel 86(2) EPÜ.

**1.** Schlauchförmiges Hüllnetz für Wurst und dergleichen, das eine in Längsrichtung dehnbare Struktur aufweist, **dadurch gekennzeichnet, daß** es einen längs verlaufenden Aufreißfaden (3) aufweist, dessen Länge größer ist als die des im Gebrauchszustand befindlichen Hüllnetzes (1) und mindestens eine auf der Außenseite des Netzes greifbare Schlaufe (7) bildet, deren Enden (14) mit Stellen (8) des Netzes (1) verbunden sind, die im längs gedehnten Zustand einen größeren Abstand voneinander als im Gebrauchszustand aufweisen.

**2.** Netz nach Anspruch 1 **dadurch gekennzeichnet, daß** das Netz (1) Wabenstränge (5, 6) umfaßt, die aus Wirkmaschen (8, 9, 10, 11) zusammengesetzt sind und der Aufreißfaden darin eingebunden ist.

**3.** Netz nach Anspruch 2 **dadurch gekennzeichnet, daß** die Wabenstränge (5, 6) des Netzes (1) teils als Fransen gewirkt sind und der Aufreißfaden (3) in die Fransen eingebunden ist.

**4.** Netz nach Anspruch 3 **dadurch gekennzeichnet, daß** der Aufreißfaden (3) zwischen einem Paar von Maschenschenkeln (11)und einem Platinenfaden (8) liegt.

**5.** Netz nach Anspruch 4 **dadurch gekennzeichnet, daß** der Platinenfaden (8) auf der Außenseite des Netzes (1) liegt.

**6.** Netz nach einem der Ansprüche 2 bis 5 **dadurch gekennzeichnet, daß** die den Aufreißfaden (3) enthaltenden Netzstränge (5 oder 6) mit der zugehörigen Wursthülle und/oder dem Aufreißfaden (3) verklebt sind.

**7.** Verfahren zum Herstellen eines Netzschlauchs durch Wirken oder Knüpfen, der im Herstellungszustand eine größere Länge als im Gebrauchszustand hat, **dadurch gekennzeichnet, daß** bei der Herstellung ein Aufreißfaden (3) eingearbeitet wird, den man während der Verkürzung des Netzes (1) im Übergang zum Gebrauchszustand zwischen mindestens zwei Stellen, an denen er mit dem Netz verbunden ist, eine von außen zugängliche Schlaufe bilden läßt.

**8.** Verfahren nach Anspruch 7 **dadurch gekennzeichnet, daß** das Netz als Raschel- oder Kettengewirk hergestellt und der Aufreißfaden in Wirkmaschen eingelegt wird.

**9.** Verfahren nach Anspruch 8 **dadurch gekennzeichnet, daß** er in je eine Masche aller Fransen (6) von aufeinander folgenden Netzwaben(4) eingelegt wird.

**10.** Verfahren nach einem der Ansprüche 7 bis 9 **dadurch gekennzeichnet, daß** der Aufreißfaden (3)zwischen die Maschenschenkel (11) und den zugehörigen Platinenfaden (8) eingelegt wird.

**11.** Verfahren nach Anspruch 10 **dadurch gekennzeichnet, daß** das Gewirk anschließend gewendet wird, falls der Platinenfaden (8) bei der Herstellung innen liegt.

**12.** Wursthülle, die mit einem Hüllnetz (1) nach einem der Ansprüche 1 bis 6 verbunden ist.

**13.** Wursthülle nach Anspruch 12 **dadurch gekennzeichnet, daß** das Hüllnetz (1) mit der Wursthülle verklebt ist.

**14.** Wursthülle nach Anspruch 13 **dadurch gekennzeichnet, daß** das gewirkte Hüllnetz in Längsrichtung verlaufende, als Trikot ausgebildete Wabenstränge 5 aufweist und die verklebung mit der Wursthülle im Bereich dieser längs verlaufenden Wabenstränge (5) sicherer oder häufiger oder großflächiger ist als im Bereich der quer verlaufenden Wabenstränge (6).

**15.** Wurst oder dergleichen mit einer an den Enden verschlossenen Wursthülle, **dadurch gekennzeichnet, daß** sie von einem Hüllnetz (1) gemäß einem der Ansprüche 1 bis 6 oder einer Wursthülle nach einem der Ansprüche 12 bis 14 umhüllt ist und die Enden des Aufreißfadens (3) in den Endverschlüssen (2) der Wursthülle gesichert sind.
